# EUROPÄISCHE PATENTSCHRIFT

(11) **EP 2 351 197 B1**
(45) Veröffentlichungstag und Bekanntmachung des Hinweises auf die Patenterteilung: **03.10.2012**
(21) Anmeldenummer: 09760776.6
(22) Anmeldetag: 30.11.2009
(51) Int. Cl.: H02K 23/58, H02K 7/116

(54) **ELEKTROMOTOR-GETRIEBE-EINHEIT**
ELECTRIC MOTOR/GEAR MECHANISM UNIT
UNITÉ DE MOTORÉDUCTEUR ÉLECTRIQUE

(30) Priorität: 30.11.2008 IL 19561308
(43) Veröffentlichungstag der Anmeldung: 03.08.2011
(73) Patentinhaber: Maxon Motor AG, 6072 Sachseln (CH)
(72) Erfinder: SHERWIN, Daniel, 90815 Jerusalem (IL); FRITSCHY, Hugo, CH-6072 Sachseln (CH); FÖLMLI, Franzxaver, CH-6370 Oberdorf (CH); SCHULZE, Jens, Oliver, CH-6074 Giswil (CH); PITTINI, Raniero, CH-6052 Hergiswil (CH); ZIMMERMANN, Dirk, 79350 Sexau (DE)
(74) Vertreter: Grünecker, Kinkeldey, Stockmair & Schwanhäusser
(86) Internationale Anmeldenummer: PCT/EP2009/008518
(87) Internationale Veröffentlichungsnummer: WO 2010/060647

(56) Entgegenhaltungen:
- DE-A1- 3 826 142
- GB-A- 1 007 524
- JP-A- 2001 275 296
- US-A- 5 272 938
- US-A- 5 621 260
- US-A- 5 662 545
- US-A1- 2004 095 037
- US-B2- 6 500 087
- US-B2- 7 211 016

## Beschreibung

Die Erfindung betrifft eine Elektromotor-Getriebe-Einheit nach dem Oberbegriff des Anspruchs 1

Elektromotor-Getriebe-Einheiten aus dem Stand der Technik sind beispielsweise aus US 4918344, US5662545, US6500087, US7211016, US2004/0095037 und GB1007524A bekannt. Die dort beschriebenen Elektromotor-Getriebe-Einheiten weisen ein gemeinsames Gehäuse für Elektromotor und Getriebe auf. In vielen Anwendungsbereichen besteht ein zunehmender Bedarf an äußerst kompakten Elektromotor-Getriebe-Einheiten, insbesondere mit hohem Drehmoment. Die Forderung nach einer kompakten Bauweise sowohl in axialer als auch radialer Ausdehnung der Elektromotor-Getriebe-Einheiten wird zunehmend verstärkt. Die aus dem Stand der Technik bekannten Elektromotor-Getriebe-Einheiten können zukünftigen Anforderungen nicht mehr gerecht werden und sind zum Teil aüfwendig in der Herstellung.

Es ist daher Aufgabe der vorliegenden Erfindung, eine äußert kompakte Elektromotor-Getriebe-Einheit mit hohem Drehmoment bereit zu stellen. Die Aufgabe wird gelöst durch die Merkmale des Anspruchs 1. Es wird ausgegangen von einer Elektromotor-Getriebe-Einheit mit einem Gehäuse, einer im Inneren des Gehäuses drehbar angeordneten eisenlosen Rotorwicklung, einem mit der Rotorwicklung verbunden Kollektor, einer sich durch den Kollektor erstreckenden Rotorwelle, und einem mit der Rotorwelle verbundenen Getriebe mit einer Abtriebswelle. Eine erfindungsgemäße Lösung der Aufgabe liegt vor, wenn das Getriebe im Inneren der Rotorwicklung angeordnet ist, außen aus einem Hohlrad besteht, welches vorzugsweise aus magnetischem Material gefertigt ist, während die beweglichen Teile des Getriebes aus einem unmagnetischen Material gefertigt sind. Elektromotoren mit eisenloser Rotorwicklung bauen radial in der Regel sehr kompakt. Durch die erfindungsgemäße Lösung wird auch in axialer Richtung eine sehr kompakte Bauweise der gesamten Elektromotor-Getriebe-Einheit erreicht. Dadurch, dass das Hohlrad aus magnetischem Material gefertigt ist, dient es gleichzeitig als magnetischer Rückschluss für den Magnetkreis des Motors. Das Magnetfeld des Permanentmagneten dringt kaum in das Innere des Getriebes ein, wenn die in das Hohlrad eingreifenden Zahnräder aus einem unmagnetischen Material gefertigt ist. Dadurch werden Verluste durch Ummagnetisierung, Wirbelströme und magnetische Andruckkräfte vermieden. Zusätzlich kann die doppelte Funktion des Getriebegehäuses dadurch genutzt werden, dass mehr Raum für das Getriebe übrig bleibt, wodurch das Getriebe stärker ausgelegt werden kann.

Vorteilhafte Ausgestaltungen der vorliegenden Erfindung sind Gegenstand der Unteransprüche.

In einer bevorzugten Ausführungsform der vorliegenden Erfindung ist im Inneren der Rotorwicklung ein hohler Permanentmagnet angeordnet. Dieser hohle Permanentmagnet ist mit dem Gehäuse des Elektromotors verbunden und bildet somit den Stator des Elektromotors. Der hohle Permanentmagnet umschließt dabei das Getriebe der Elektromotor-Getriebe-Einheit. Bei dieser Bauweise können sehr hohe Wirkungsgrade des Elektromotors und somit der gesamten Elektromotor-Getriebe-Einheit erreicht werden.

Alternativ dazu kann der hohle Permanentmagnet auch außerhalb der Rotorwicklung angeordnet sein, so dass er die Rotorwicklung umschließt. Der hohle Permanentmagnet kann in diesem Fall das Gehäuse der Elektromotor-Getriebe-Einheit bilden. Falls ein zusätzliches Gehäuse vorgesehen ist, kann dieses aus einem magnetischen Material gefertigt sein und somit einen magnetischen Rückschluss bilden.

In einer weiteren bevorzugten Ausführungsform der vorliegenden Erfindung sind Rotorwelle und Abtriebswelle in einer Flucht.

In einer weitern bevorzugten Ausführungsform ist das Getriebe ein Planetengetriebe. Mit einem Planetengetriebe lassen sich bei kompakter Bauweise extrem hohe Untersetzungen realisieren. Alternativ dazu können auch Stirnradgetriebe oder Kegelradgetriebe zum Einsatz kommen.

In einer weiteren bevorzugten Ausführungsform der vorliegenden Erfindung ist das Planetengetriebe zumindest einstufig ausgeführt. Die mit der Rotorachse verbundene erste Getriebestufe eines Planetengetriebes ist in der Regel am höchsten belastet. Eine Getriebestufe eines Planetengetriebes umfasst jeweils einen um eine Drehachse drehbaren Planetenträger, ein Sonnenrad, ein Hohlrad und mindestens ein Planetenrad. An der Stirnseite des Planetenträgers steht für jedes Planetenrad ein Achszapfen hervor, auf dem das Planetenrad mit einer axialen Bohrung drehbar gelagert ist. Aufgrund von Fertigungstoleranzen kann es zwischen Planetenrädern und Sonnenrad bzw. Hohlrad zu hohen Reibungsverlusten kommen. Dies führt zu einer hohen Wärmeentwicklung und zu einer geringen Lebensdauer des Planetengetriebes. Die Reibungsverluste können verringert werden, wenn zwischen den Planetenrädern und dem Sonnenrad bzw. dem Hohlrad ein gewisses Spiel besteht. Dies wird vorzugsweise dadurch erreicht, dass die Planetenräder bezüglich der Drehachse des Planetenträgers radial verschieblich sind. Die Achszapfen des Planetenträgers sind dazu vorzugsweise derart ausgebildet, dass sie einen im wesentlichen elliptischen Querschnitt aufweisen. Die kleinere der beiden Hauptachsen der Ellipse verläuft dabei in radialer Richtung des Planetenträgers. Die Maßnahmen für das Spiel zwischen Planetenrädern und Sonnenrad bzw. Hohlrad werden vorzugsweise für die erste Stufe des Planetengetriebes durchgeführt. Sie sind aber auch für die weiteren Stufen des Planetengetriebes möglich, falls das Planetengetriebe mehr als eine Getriebestufe aufweist. Durch das Spiel werden die Reibungsverluste verringert. Dadurch ist auch die Wärmeentwicklung geringer und die Lebensdauer des Getriebes wird gesteigert.

Gemäß einer weiteren bevorzugten Ausführungsform der vorliegenden Erfindung weist die Rotorwell an ihrem getriebeseitigen Ende eine Außenverzahnung auf, die das Sonnenrad der ersten Getriebestufe eines Planetengetriebes bildet. Der Außendurchmesser der Außenverzahnung der Rotorwelle entspricht dabei dem Durchmesser der Rotorwelle selbst. Bei dieser Ausführungsform muss auf die Rotorwelle kein Ritzel aufgesetzt werden, welches üblicherweise das Sonnenrad der ersten Getriebestufe bildet. Der Durchmesser des Sonnenrades ist somit geringer als bei einem aufgesetzten Ritzel. Dadurch wird eine höhere Untersetzung erreicht, wodurch das Drehmoment der Elektromotor-Getriebe-Einheit gesteigert wird.

Vorzugsweise sind zumindest die Verzahnungen der Räder der ersten Getriebestufe gehärtet oder mit einer Hartschicht versehen. Die Härtung kann bei unmagnetischen metallischen Werkstoffen durch eine Oberflächenbehandlung wie z.B. eine chemische oder thermische Behandlung erfolgen. Hierdurch wird die Lebensdauer des Getriebes erhöht. Aufgrund der hohen Fertigungskosten für die Härtung bzw. Beschichtung wird diese bevorzugt nur in der ersten hoch belasteten Getriebestufe des Planetengetriebes durchgeführt. Als Grundwerkstoff eignet sich beispielsweise nichtmagnetischer Stahl. Alternative Werkstoffe für die Räder des Getriebes sind besonders harte Kunststoffe, metallische Gläser oder Keramik.

Die Lebensdauer der Elektromotor-Getriebe-Einheit kann weiter gesteigert werden, wenn das Gehäuse Kühlrippen und/oder innen- bzw. außen liegende Kühlkanäle zur verbesserten Wärmeabfuhr aufweist. Die Wärme von Getriebe, Permanentmagnet und Rotorwicklung wird über den Luftspalt zwischen Rotor und Stator an das Gehäuse übertragen. Eine verbesserte Wärmeabfuhr wird erreicht, wenn der Lagersitz des Rotors bzw. der Rotorwelle eine große Kontaktfläche aufweist.

Da die Lebensdauer des Elektromotors auch bei verstärkten Maßnahmen zur Erhöhung der Lebensdauer des Getriebes um ein vielfaches höher ist als die Lebensdauer des Getriebes, ist das Getriebe vorzugsweise austauschbar und/oder nachschmierbar ausgeführt.

Gemäß einer weiteren bevorzugten Ausführungsform der vorliegenden Erfindung ist das Getriebe zur Erhöhung der Lebensdauer mit Öl gefüllt.

Hohlzylindrische Permanentmagnete sind relativ teuer in der Herstellung. Gemäß einer weiteren bevorzugten Ausführungsform der vorliegenden Erfindung ist der hohle Stator-Permanentmagnet daher aus Magnetsegmenten zusammengesetzt. Somit wird eine kostengünstige Fertigung erreicht.

Um eine bessere Führung des Rotors bzw. der Rotorwicklung zu erreichen und ein Anstreifen der Rotorwicklung an Bauteilen des Stators zu vermeiden, ist die Rotorwelle in axialer Richtung mittels einer Feder bzw. einer Federplatte vorgespannt gelagert. Vorzugsweise besteht dazu im Bürstendeckel ein Lagersitz mit Vorspannung.

Bei der erfindungsgemäßen Elektromotor-Getriebe-Einheit können verschiedene Elektromotoren zum Einsatz kommen. Denkbar sind beispielsweise sowohl Wechselstrom- als auch Gleichstrommotoren, mechanisch kommutierte oder bürstenlose Motoren und Schrittmotoren.

Ein bevorzugtes Ausführungsbeispiel der vorliegenden Erfindung wird im Folgenden anhand von Zeichnungen näher erläutert.

Es zeigen:
- Fig. 1: eine teilweise geschnittene Schrägansicht einer erfindungsgemäßen Elektromotor-Getriebe-Einheit.
- Fig. 2: eine gerade Längsschnittansicht der erfindungsgemäßen Elektromotor-Getriebe-Einheit aus der Fig. 1.
- Fig. 3: den Planetenträger der ersten Stufe des Planetengetriebes der erfindungsgemäßen Elektromotor-Getriebe-Einheit aus den Fig. 1 und 2.

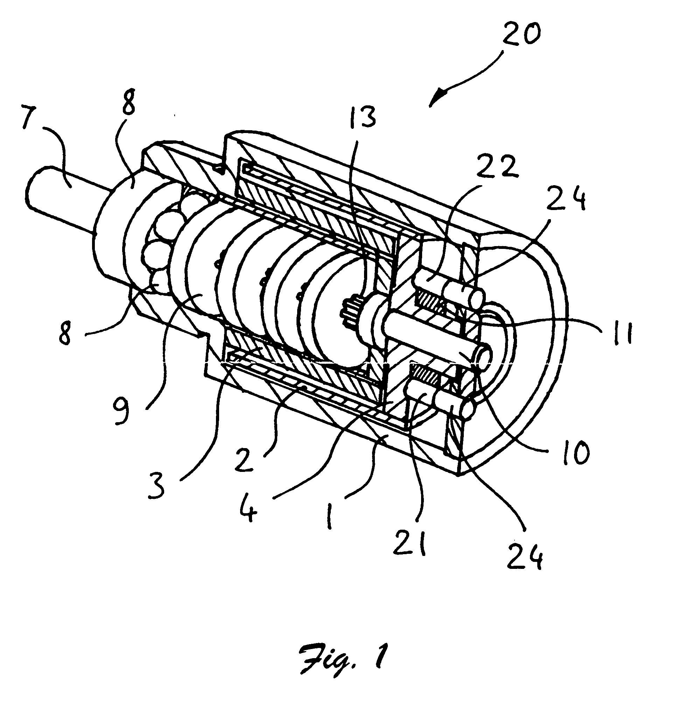

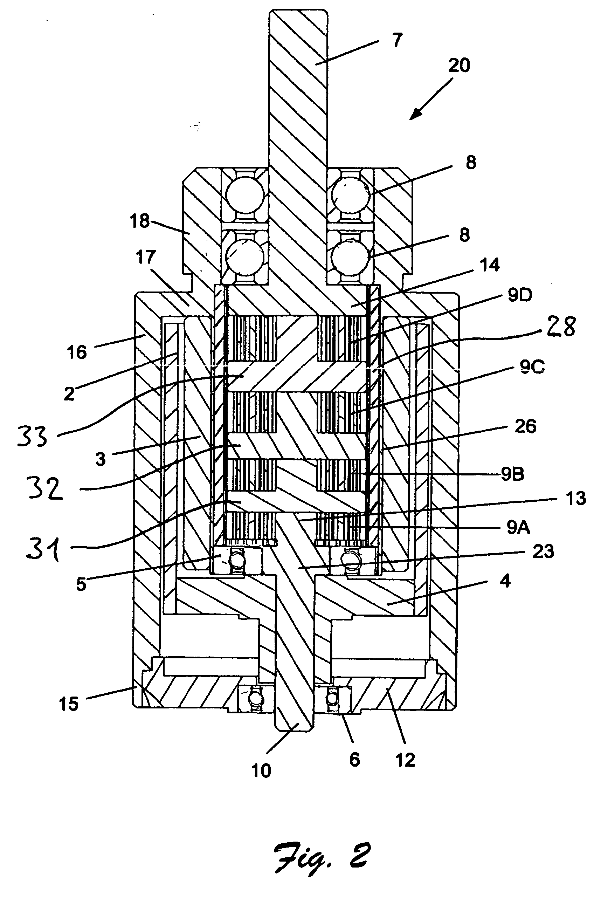

Die Fig. 1 und 2 zeigen eine erfindungsgemäße Elektromotor-Getriebe-Einheit 20 nach einem bevorzugten Ausführungsbeispiel der vorliegenden Erfindung. Die Elektromotor-Getriebe-Einheit 20 besteht im Wesentlichen aus einem Glockenankermotor mit einer eisenlosen Rotorwicklung 2 nach bekannter Bauart, und einem Planetengetriebe 9, dass in den Innenraum des hohlzylindrischen Glockenankermotors eingesetzt ist. Das Gehäuse 1 der erfindungsgemäßen Elektromotor-Getriebe-Einheit 20 weist ein bürstendeckelseitiges Ende 15 und ein abtriebseitiges Ende 16 auf. Am abtriebseitigen Ende 16 geht das Gehäuse 1 über eine Verengung 17 in einen Halsbereich 18 über. Innerhalb des Gehäuses 1 und konzentrisch zu diesem ist eine eisenlose Rotorwicklung 2 angeordnet. Die eisenlose Rotorwicklung 2 ist über den Kollektor 4 koaxial und drehfest mit der Rotorwelle 10 verbunden. Am bürstendeckelseitigen Ende 15 des Gehäuses 1 ist das Gehäuse 1 durch einen Bürstendeckel 12 geschlossen. Der gesamte Rotor einschließlich der eisenlosen Rotorwicklung 2 ist über das Lager 6 konzentrisch zum Gehäuse 1 drehbar im Bürstendeckel gelagert. In Richtung des abtriebseitigen Endes 16 des Gehäuses ist die Rotorwelle 10 ferner über das Lager 5 drehbar an dem hohlen Permanentmagneten 3 gelagert, welcher drehfest mit dem Gehäuse 1 verbunden ist. Die Lagerung der Rotorwelle 10 im Lager 5 erfolgt über einen kleinen stufenförmigen Flansch 23 der Rotorwelle 10. Der hohlzylindrische Permanentmagnet 3 sitzt hülsenförmig über einer ringförmigen Stützwand 26 und wird von der eisenlosen Rotorwicklung 2 umschlossen. Zwischen eisenloser Rotorwicklung 2 und hohlzylindrischem Permanentmagnet 3 besteht ein kleiner Luftspalt. In Fig. 1 ist zu erkennen, dass der Glockenankermotor als bürstenkommutierter Motor ausgeführt ist. Die Kommutierung erfolgt über zwei am Kollektor 4 schleifenden Kohlebürsten 11, die von den Bürstenhaltern 21 und 22 gehalten werden. Der elektrische Anschluss der beiden Kohlebürsten 11 erfolgt über die beiden Anschlusskabel 24.

Am ins Innere der Elektromotor-Getriebe-Einheit zeigenden Ende der Rotorwelle 10 bildet ein Ritzel 13 das Sonnenrad der ersten Getriebestufe eines vierstufigen Planetengetriebes 9. Das gemeinsame Hohlrad 28 der vier Getriebestufen bildet zugleich das Gehäuse des Planetengetriebes 9. Das Planetengetriebe 9 bildet somit eine selbstständige Einheit und kann fertig montiert in das Innere des Glockenankermotors eingesetzt werden. Das Planetengetriebe 9 liegt mit seinem Hohlrad 28 konzentrisch und bündig an der ringförmigen Stützwand 26 des Gehäuses 1 der Elektromotor-Getriebe-Einheit 20 an. In Fig. 2 sind die Planetenräder der ersten Getriebestufe mit dem Bezugszeichen 9A, die Planetenräder der zweiten Getriebestufe mit dem Bezugszeichen 9B, die der dritten Stufe entsprechend mit 9C, und die der vierten Stufe mit 9D bezeichnet. Ferner sind die Planetenträger der ersten, zweiten, dritten und vierten Stufe der Reihe nach mit den Bezugszeichen 31, 32, 33 und 14 bezeichnet. Die Planetenträger der ersten, zweiten und dritten Stufe sind mit dem Sonnenrad der jeweils nachfolgenden Stufe verbunden. Der Planetenträger 14 der vierten Stufe bildet zugleich den Flansch für die Abtriebswelle 7, deren Achse mit der Achse der Rotorwelle 10 zusammenfällt. Die Abtriebswelle 7 ist im Halsbereich 18 des Gehäuses 1 der Elektromotor-Getriebe-Einheit 20 über zwei Lager 8 drehbar gelagert. Alle Sonnenräder, Planetenräder, Planetenträger sowie das Hohlrad 28 des Planetengetriebes 9 sind aus unmagnetischen Materialien gefertigt, um Störeinflüsse bzw. Verluste während des Betriebs der Elektromotor-Getriebe-Einheit zu vermeiden. Die hoch belastete erste Stufe des Planetengetriebes 9 weist zudem durch Oberflächenvergütung gehärtete Verzahnungen auf. Ebenso können auch die restlichen Bauteile des Planetengetriebes 9, insbesondere die Bauteile der weiteren Stufen des Planetengetriebes, zumindest oberflächengehärtet sein oder aus besonders verschleißfesten unmagnetischen Werkstoffen gefertigt sein. Es sei angemerkt, dass je nach gewünschtem Untersetzungsverhältnis bzw. je nach gewünschtem Drehmoment der Abtriebswelle 7 auch ein- bis dreistufige Planetengetriebe zum Einsatz kommen können. Theoretisch wäre auch der Einsatz eines fünf- oder mehrstufigen Planetengetriebes möglich, jedoch sind die Reibungsverluste bei Planetengetrieben mit fünf oder mehr Stufen derart hoch, dass sie in der Regel nicht eingesetzt werden.

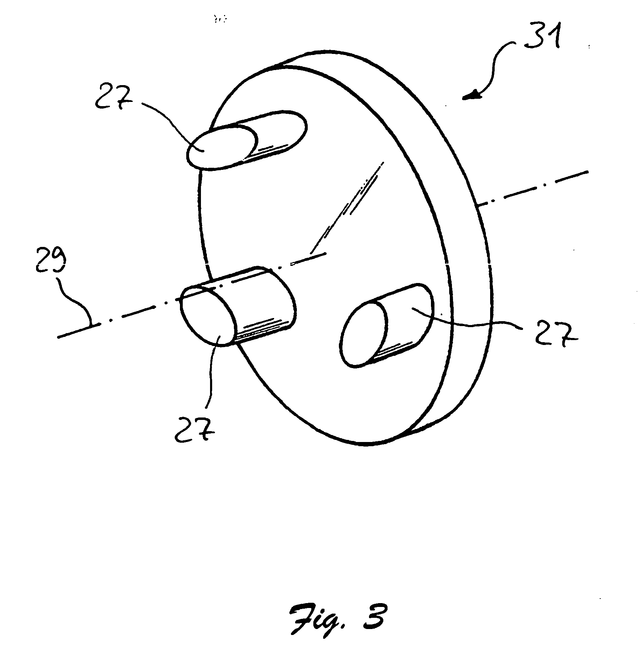

In Fig. 3 ist der Planetenträger 31 der ersten Getriebestufe des Planetengetriebes 9 abgebildet. Um die Reibung und damit die Wärmeentwicklung in der ersten Stufe zu verringern, ist die Lagerung der Planetenräder 9A der ersten Getriebestufe bewusst spielbehaftet ausgeführt. Gewollt ist dabei ein Spiel in radialer Richtung bezogen auf die Drehachse 29 des Planetenträgers 31, die aufgrund der koaxialen Anordnung von Motor und Getriebe sowie aufgrund des Eingriffs des Ritzels 13 mit der Drehachse der Rotorwelle 10 zusammenfällt. Die Planetenräder 9A der ersten Getriebestufe sind jeweils mit einer hohlzylindrischen Bohrung drehbar auf den in Fig. 3 abgebildeten Achszapfen 27 des Planetenträgers 31 gelagert. Die Achszapfen 27 erstrecken sich senkrecht von der Stirnfläche des Planetenträgers 31 parallel zur Rotorachse 10 bzw. zur gesamten Längsachse der Elektromotor-Getriebe-Einheit 20. Der Querschnitt der Achszapfen 27 ist elliptisch, sodass die kleinere Hauptachse des elliptischen Querschnitts radial zur Drehachse 29 des Planetenträgers 31 verläuft. Die größere Hauptachse der Ellipse entspricht ungefähr dem Durchmesser der axialen Bohrung der Planetenräder 9A. Die Planetenräder 9A sind somit in radialer Richtung bezogen auf die Drehachse 29 des Planetenträgers 31 spielbehaftet gelagert. Ihre optimale Position in Bezug auf das Sonnenrad 13 der ersten Stufe bzw. das Hohlrad 28 stellt sich durch die spielbehaftete Lagerung aufgrund der Toleranzen automatisch ein. Während im dargestellten Fall drei Planetenräder bzw. drei Achszapfen vorgesehen sind, sind auch andere Planetenräderanzahlen pro Stufe möglich. Die in Fig. 3 gewählte Ausführung des Planetenträgers 31 der ersten Getriebestufe des Planetengetriebes 9 kann auch für die weiteren Stufen gewählt werden.

Nach Ablauf der Lebensdauer kann das alte Planetengetriebe 9 als eigene Baugruppe aus der Elektromotor-Getriebe-Einheit entnommen werden um ein neues Planetengetriebe 9 in die Elektromotor-Getriebe-Einheit 20 einzusetzen. Zu den bereits angesprochenen Maßnahmen zur Lebensdauererhöhungen des Planetengetriebes 9 kann das Planetengetriebe zur Verbesserung des Wärmeübergangs auch vollständig mit Öl befüllt werden. Das Öl dient gleichzeitig der Schmierung. Die Kühlung bzw. Wärmeabfuhr der Elektromotor-Getriebe-Einheit 20 erfolgt über nicht dargestellte Kühlrippen des Gehäuses 1. Die Kühlung kann zusätzlich durch Kühlkanäle im Gehäuse 1 verbessert werden.

## Patentansprüche

1. Elektromotor-Getriebe-Einheit (20) mit einem Gehäuse (1), einer im Inneren des Gehäuses (1) drehbar angeordneten eisenlosen Rotorwicklung (2), einem mit der Rotorwicklung (2) verbundenen Kollektor (4), einer sich durch den Kollektor (4) erstreckenden Rotorwelle (10), und einem mit der Rotorwelle (10) verbundenen Getriebe (9) mit einer Abtriebswelle (7), **dadurch gekennzeichnet, dass** das Getriebe (9) im Inneren der Rotorwicklung (2) angeordnet ist, außen aus einem innenverzahnten Hohlrad (28) besteht und die darin eingreifenden Zahnräder (9A, 9B, 9C, 9D) aus einem unmagnetischen Material gefertigt sind, wobei Gehäuse (1) und Hohlrad (28) aus einem weichmagnetischen Material bestehen.

2. Elektromotor-Getriebe-Einheit (20) nach Anspruch 1, **dadurch gekennzeichnet, dass** im. Inneren der Rotorwicklung (2) ein hohler Permanentmagnet (3) angeordnet ist.

3. Elektromotor-Getriebe-Einheit (20) nach einem der Ansprüche 1 bis 2, **dadurch gekennzeichnet, dass** Rotorwelle (10) und Abtriebswelle (7) in einer Flucht sind.

4. Elektromotor-Getriebe-Einheit (20) nach einem der Ansprüche 1 bis 3, **dadurch gekennzeichnet, dass** das Getriebe (9) ein Planetengetriebe ist.

5. Elektromotor-Getriebe-Einheit (20) nach Anspruch 4, **dadurch gekennzeichnet, dass** das Planetengetriebe (9) zumindest einstufig ausgeführt ist, wobei jede Getriebestufe jeweils einen um eine Drehachse (29) drehbaren Planetenträger (31, 32, 33, 14), ein Sonnenrad, ein Hohlrad (28) und mindestens ein Planetenrad (9A, 9B, 9C, 9D) umfasst, wobei an der Stirnseite des Planetenträgers (31, 32, 33, 14) ferner mindestens ein Achszapfen (27) hervorsteht, auf dem das Planetenrad (9A, 9B, 9C, 9D) drehbar gelagert ist, und wobei zumindest das mindestens eine Planetenrad (9A) der ersten Getriebestufe wenigstens radial verschieblich bezüglich der Drehachse (29) des Planetenträgers (31) ausgebildet ist.

6. Elektromotor-Getriebe-Einheit (20) nach Anspruch 5, **dadurch gekennzeichnet, dass** zumindest der mindestens eine Achszapfen (27) des Planetenträgers (31) der ersten Getriebestufe jeweils einen im wesentlichen elliptischen Querschnitt aufweist.

7. Elektromotor-Getriebe-Einheit (20) nach einem der Ansprüche 4 bis 6, **dadurch gekennzeichnet, dass** die Rotorwelle (10) an ihrem getriebeseitigen Ende eine Außenverzahnung aufweist, die das Sonnenrad (13) der ersten Getriebestufe bildet, wobei der Außendurchmesser der Außenverzahnung der Rotorwelle (10) dem Durchmesser der Rotorwelle (10) entspricht.

8. Elektromotor-Getriebe-Einheit (20) nach einem der Ansprüche 4 bis 7, **dadurch gekennzeichnet, dass** zumindest die Verzahnungen der Räder der ersten Getriebestufe gehärtet oder mit einer Hartschicht versehen sind.

9. Elektromotor-Getriebe-Einheit (20) nach einem der Ansprüche 1 bis 8, **dadurch gekennzeichnet, dass** das Gehäuse (1) Kühlrippen und/oder innen und/oder außen liegende Kühlkanäle aufweist.

10. Elektromotor-Getriebe-Einheit (20) nach einem der Ansprüche 1 bis 9, **dadurch gekennzeichnet, dass** das Getriebe (9) austauschbar und/oder nachschmierbar ist.

11. Elektromotor-Getriebe-Einheit (20) nach einem der Ansprüche 1 bis 10, **dadurch gekennzeichnet, dass** das Getriebe (9) mit OI gefüllt ist.

12. Elektromotor-Getriebe-Einheit (20) nach einem der Ansprüche 2 bis 11, **dadurch gekennzeichnet, dass** der hohle Permanentmagnet (3) aus Magnetsegmenten zusammengesetzt ist.

13. Elektromotor-Getriebe-Einheit (20) nach einem der Ansprüche 1 bis 12, **dadurch gekennzeichnet, dass** die Rotorwelle (10) in axialer Richtung mittels einer Feder oder einer Federplatte vorgespannt gelagert ist.

## Claims

1. An electric motor/gear mechanism unit (20) comprising a housing (1), an iron-free rotor winding (2) rotatably arranged in the interior of the housing (1), a collector (4) connected to the rotor winding (2), a rotor shaft (10) extending through the collector (4), and a gear mechanism (9) which is connected to the rotor shaft (10) and which has an output shaft (7), **characterized in that** the gear mechanism (9) is arranged in the interior of the rotor winding (2), that it consists externally of an internally toothed annulus gear (28), and that the gears (9A, 9B, 9C, 9D) meshing therewith are produced from a non-magnetic material, the housing (1) and the annulus gear (28) consisting of a magnetically soft material.

2. An electric motor/gear mechanism unit (20) according to claim 1, **characterized in that** a hollow permanent magnet (3) is arranged in the interior of the rotor winding (2).

3. An electric motor/gear mechanism unit (20) according to one of the claims 1 to 2, **characterized in that** the rotor shaft (10) and the output shaft (7) are in alignment with one another.

4. An electric motor/gear mechanism unit (20) according to one of the claims 1 to 3, **characterized in that** the gear mechanism (9) is a planetary gear unit.

5. An electric motor/gear mechanism unit (20) according to claim 4, **characterized in that** the planetary gear unit (9) is configured such that it comprises at least one stage, each gear stage comprising a planetary carrier (31, 32, 33, 14) which is rotatable about an axis of rotation (29), a sun gear, an annulus gear (28) and at least one planet gear (9A, 9B, 9C, 9D), the end face of the planetary carrier (31, 32, 33, 14) further being provided with at least one journal (27) which projects therefrom and on which the planet gear (9A, 9B, 9C, 9D) is rotatably supported, and at least said at least one planet gear (9A) of the first gear stage being implemented such that it is at least radially displaceable relative to the axis of rotation (29) of the planetary carrier (31).

6. An electric motor/gear mechanism unit (20) according to claim 5, **characterized in that** at least said at least one journal (27) of the planetary carrier (31) of the first gear stage has a substantially elliptical cross-section.

7. An electric motor/gear mechanism unit (20) according to one of the claims 4 to 6, **characterized in that** the rotor shaft (10) has, on its end facing the gear mechanism, external teeth defining the sun gear (13) of the first gear stage, the outer diameter of said external teeth of the rotor shaft (10) corresponding to the diameter of the rotor shaft (10).

8. An electric motor/gear mechanism unit (20) according to one of the claims 4 to 7, **characterized in that** at least the teeth of the gears of the first gear stage are hardened or provided with a hard layer.

9. An electric motor/gear mechanism unit (20) according to one of the claims 1 to 8, **characterized in that** the housing (1) is provided with cooling fins and/or with internal and/or external cooling channels.

10. An electric motor/gear mechanism unit (20) according to one of the claims 1 to 9, **characterized in that** the gear mechanism (9) can be replaced and/or relubricated.

11. An electric motor/gear mechanism unit (20) according to one of the claims 1 to 10, **characterized in that** the gear mechanism (9) is filled with oil.

12. An electric motor/gear mechanism unit (20) according to one of the claims 2 to 11, **characterized in that** the hollow permanent magnet (3) is composed of magnet segments.

13. An electric motor/gear mechanism unit (20) according to one of the claims 1 to 12, **characterized in that** the rotor shaft (10) is supported such that it is axially preloaded by means of a spring or a spring plate.

## Revendications

1. Unité de motoréducteur électrique (20) comportant un boîtier (1), un enroulement de rotor sans noyau (2) agencé de manière rotative à l'intérieur du boîtier (1), un collecteur (4) connecté à l'enroulement de rotor (2), un arbre de rotor (10) qui s'étend à travers le collecteur (4), et une transmission (9) connectée à l'arbre de rotor (10) avec un arbre de sortie (7), **caractérisée en ce que** la transmission (9) est agencée à l'intérieur de l'enroulement de rotor (2), est constituée à l'extérieur d'une couronne à denture interne (28), et les engrenages (9A, 9B, 9C, 9D) qui s'y engrènent sont fabriqués d'un matériau non magnétique, dans laquelle le boîtier (1) et la couronne (28) sont constitués d'un matériau magnétique doux.

2. Unité de motoréducteur électrique (20) selon la revendication 1, **caractérisée en ce qu'**un aimant permanent creux (3) est agencé à l'intérieur de l'enroulement de rotor (2).

3. Unité de motoréducteur électrique (20) selon l'une des revendications 1 ou 2, **caractérisée en ce que** l'arbre de rotor (10) et l'arbre de sortie (7) se trouvent dans le même alignement.

4. Unité de motoréducteur électrique (20) selon l'une des revendications 1 à 3, **caractérisée en ce que** la transmission (9) est un train épicycloïdal.

5. Unité de motoréducteur électrique (20) selon la revendication 4, **caractérisée en ce que** le train épicycloïdal (9) comporte au moins un étage, dans laquelle chaque étage de transmission comporte un support d'engrenage planétaire (31, 32, 33, 14) tournant autour d'un axe de rotation (29), un engrenage solaire, une couronne (28) et au moins un engrenage planétaire (9A, 9B, 9C, 9D), dans laquelle en outre au moins un goujon d'axe (27) fait saillie du côté frontal du support d'engrenage planétaire (31, 32, 33, 14), sur lequel l'engrenage planétaire (9A, 9B, 9C, 9D) est monté de façon rotative, et dans laquelle au moins ledit au moins un engrenage planétaire (9A) du premier étage de transmission est agencé de manière coulissante au moins dans le sens radial par rapport à l'axe de rotation (29) du support d'engrenage planétaire (31).

6. Unité de motoréducteur électrique (20) selon la revendication 5, **caractérisée en ce qu'**au moins ledit au moins un goujon d'axe (27) du support d'engrenage planétaire (31) du premier étage de transmission présente chaque fois une section essentiellement elliptique.

7. Unité de motoréducteur électrique (20) selon l'une des revendications 4 à 6, **caractérisée en ce que** l'arbre de rotor (10) comporte à son extrémité côté transmission une denture externe qui constitue l'engrenage solaire (13) du premier étage de transmission, dans laquelle le diamètre externe de la denture externe de l'arbre de rotor (10) correspond au diamètre de l'arbre de rotor (10).

8. Unité de motoréducteur électrique (20) selon l'une des revendications 4 à 7, **caractérisée en ce qu'**au moins les dentures des engrenages du premier étage de transmission sont trempées ou comportent une couche durcie.

9. Unité de motoréducteur électrique (20) selon l'une des revendications 1 à 8, **caractérisée en ce que** le boîtier (1) comporte des ailettes de refroidissement et/ou des canaux de refroidissement internes et/ou externes disposés à l'extérieur.

10. Unité de motoréducteur électrique (20) selon l'une des revendications 1 à 9, **caractérisée en ce que** la transmission (9) peut être remplacée et/ou lubrifiée.

11. Unité de motoréducteur électrique (20) selon l'une des revendications 1 à 10, **caractérisée en ce que** la transmission (9) est remplie d'huile.

12. Unité de motoréducteur électrique (20) selon l'une des revendications 2 à 11, **caractérisée en ce que** l'aimant permanent creux (3) est constitué de segments d'aimant.

13. Unité de motoréducteur électrique (20) selon l'une des revendications 1 à 12, **caractérisée en ce que** l'arbre de rotor (10) est monté sous précontrainte en direction axiale au moyen d'un ressort ou d'une lame de ressort.
